# EUROPÄISCHE PATENTSCHRIFT

(11) **EP 0 850 206 B1**
(45) Veröffentlichungstag und Bekanntmachung des Hinweises auf die Patenterteilung: **26.03.2003**
(21) Anmeldenummer: 96931764.3
(22) Anmeldetag: 04.09.1996
(51) Int. Cl.: C04B 14/06, C04B 30/02

(54) **AEROGEL- UND KLEBSTOFFHALTIGES VERBUNDMATERIAL, VERFAHREN ZU SEINER HERSTELLUNG SOWIE SEINE VERWENDUNG**
AEROGEL AND ADHESIVE-CONTAINING COMPOSITE, PROCESS FOR ITS PRODUCTION AND ITS USE
MATERIAU COMPOSITE CONTENANT UN AEROGEL ET UN ADHESIF, PROCEDE PERMETTANT DE LE PRODUIRE ET UTILISATION

(30) Priorität: 11.09.1995 DE 19533565; 07.06.1996 DE 19622865
(43) Veröffentlichungstag der Anmeldung: 01.07.1998
(73) Patentinhaber: CABOT CORPORATION, Boston, Massachusetts 02210-2019 (US)
(72) Erfinder: SCHWERTFEGER, Fritz, D-60529 Frankfurt am Main (DE); ZIMMERMANN, Andreas, D-64347 Griesheim (DE); WONNER, Johann, D-60386 Frankfurt am Main (DE); SCHOLL, Frank, D-63543 Neuberg (DE); SCHMIDT, Marc, D-60529 Frankfurt am Main (DE)
(74) Vertreter: Luderschmidt, Schüler & Partner GbR
(86) Internationale Anmeldenummer: EP9603867
(87) Internationale Veröffentlichungsnummer: WO97010187

(56) Entgegenhaltungen:
- EP-A- 0 672 635
- WO-A-96/15997
- DE-A- 2 941 606
- DE-A- 4 437 424

## Beschreibung

Die Erfindung betrifft neuartige Verbundmaterialien beliebiger Formgebung mit hohem Wärmedämmvermögen, die von 5 bis 97 Vol.-% Aerogel-Partikel und mindestens einen Klebstoff enthalten, wobei der Teilchendurchmesser der Aerogel-Partikel kleiner als 0,5 mm ist.

Konventionelle Dämmstoffe auf Basis von Polystyrol, Polyolefinen und Polyurethanen werden in der Regel unter Verwendung von organischen Treibmitteln, wie z. B. Fluorchlorkohlenwasserstoffen (FCKW) hergestellt. Das in den Zellen des Schaumstoffs eingeschlossene Treibmittel ist für das hohe Wärmedämmvermögen verantwortlich. Derartige Treibmittel belasten die Umwelt, da sie langsam in die Atmosphäre entweichen.

Ferner bekannt sind Formkörper, die duroplastische Harze, wie z. B. Harnstoff-, Melamin- und Phenolformaldehydharze bzw. Mischungen aus diesen Harzen enthalten. Die Harze werden dabei mit Füllstoffen, wie z. B. Holzmehl, Asbest und bevorzugt Cellulose, gegebenenfalls zusätzlich mit Gleitmitteln, wie z. B. Zinkstearat, Pigmenten, wie z. B. Titandioxid, Weichmachern, wie z. B. Glycerin oder o,p-Toluolsulfonamid und/oder sauren bzw. säureabspaltenden Härtungsbeschleunigern zu sogenannten Preßmassen vermischt, die in Pressen unter Anwendung von Drücken von 100 bis 2500 bar und Temperaturen von 100 bis 200°C zu Formkörpern ausgehärtet werden (Kunststoffhandbuch 10 "Duroplaste", Herausgeber Prof. Dr. Woebcken, 2. Auflage 1988, Hanser Verlag, S. 266-274). Die Harze können dabei als Pulverharze im sog. Schmelzflußverfahren oder als Flüssigharze im sog. Flüssigharzverfahren eingesetzt werden. Die Zusammensetzung einer typischen Preßmasse nach DIN 7708 Typ 152 sieht folgendermaßen aus:

| | |
|---|---|
| 50 Gew.-% | Melamin-Formaldehyd-Harz |
| 35 Gew.-% | gebleichte Sulfitcellulose |
| 1 Gew.-% | Gleitmittel, z. B. Zinkstearat |
| 10 Gew.-% | Weißpigment, z. B. Lithopone |
| 1 Gew.-% | Härtungsbeschleuniger und |
| 3 Gew.-% | Weichmacher |

Solche nach DIN 7708 erhaltenen Normprobekörper weisen Dichten zwischen 1,5 und 2,0 g/cm³ und Wärmeleitfähigkeiten zwischen 300 und 600 mW/m•K auf (Kunststoffhandbuch 10 "Duroplaste", Herausgeber Prof. Dr. Woebcken, 2. Auflage 1988, Hanser Verlag, S. 269-270). Sie sind deshalb für den Einsatz zur Wärmeisolation ungeeignet.

Aerogele, insbesondere solche mit Porositäten über 60 % und Dichten unter 0,6 g/cm³, weisen aufgrund ihrer sehr geringen Dichte und hohen Porosität eine äußerst geringe thermische Leitfähigkeit auf und finden deshalb Anwendung als Wärmeisolationsmaterialien, wie z. B. in der EP-A-0 171 722 beschrieben.

Die hohe Porosität führt aber auch zu geringer mechanischer Stabilität sowohl des Gels, aus dem das Aerogel getrocknet wird, als auch des getrockneten Aerogels selbst.

Es ist ebenfalls bekannt, daß Aerogele außerordentlich geringe Dielektrizitätskonstanten mit Werten zwischen 1 und 2 aufweisen, je nach Dichte des Aerogels. Aerogele sind daher auch für elektronische Anwendungen, etwa für Hochfrequenzanwendungen prädestiniert (S. C. W. Hrubesh et al., J. Mater. Res. Vol. 8, No. 7, 1736-1741).

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Drucks entfernt wird. Wird die Flüssigkeit des Gels dagegen unterkritisch, beispielsweise unter Bildung einer Flüssig-Dampf-Grenzphase entfernt, dann bezeichnet man das entstehende Gel vielfach auch als Xerogel. Es ist anzumerken, daß es sich bei den erfindungsgemäßen Gelen um Aerogele im Sinne von Gel mit Luft als Dispersionsmittel handelt.

Der Formgebungsprozeß des Aerogels wird während des Sol-Gel-Übergangs abgeschlossen. Nach Ausbildung der festen Gelstruktur kann die äußere Form nur noch durch Zerkleinerung, beispielsweise Mahlen, verändert werden.

Für viele Anwendungen ist es jedoch notwendig, die Aerogele in bestimmten Formen einzusetzen. Hierzu ist es notwendig, im Anschluß an die Aerogel-Herstellung, also nach der Trocknung, einen Formgebungsschritt durchzuführen, ohne daß eine wesentliche Änderung der inneren Struktur des Aerogels im Hinblick auf die Anwendung stattfindet.

In der EP-A-0 340 707 wird ein Dämmstoff der Dichte 0,1 bis 0,4 g/cm³ offenbart, der aus mindestens 50 Vol.-% Silica-Aerogel-Partikeln mit einem Durchmesser zwischen 0,5 und 5 mm besteht, die mittels mindestens einem organischen und/oder anorganischen Bindemittel miteinander verbunden sind.

Dabei werden als organische Bindemittel Reaktionsklebstoffe, Siliconharzklebstoffe, Schmelzklebstoffe und wäßrige Dispersionsklebstoffe offenbart.

Die relativ grobe Körnung bewirkt jedoch, daß die hergestellten Dämmstoffe kein einheitliches Erscheinungsbild haben, was für viele Anwendungen nachteilig ist. Weiterhin bewirkt die relativ grobe Körnung, daß aus dem Dämmstoff hergestellte Formkörper eine inhomogene Verteilung des Aerogelmaterials aufweisen. Dies gilt insbesondere, wenn die kleinsten typischen Dimensionen der Formkörper, bei Folien oder Platten die Dicke, nicht sehr viel größer als der typische Aerogel-Partikel-Durchmesser ist. Vor allem in den Randbereichen würde ein erhöhter Bindemittelanteil benötigt, der sich dann negativ auf die thermische Leitfähigkeit und die dielektrischen Eigenschaften des Formkörpers besonders an der Oberfläche auswirken würde.

Insbesondere für elektronische Anwendungen werden besonders dünne Schichten (0,01 bis 2,0 mm) benötigt, die mittels den oben beschriebenen Aerogel-Partikeln nicht hergestellt werden können.

Darüber hinaus würden in einem Formkörper aus diesem Dämmstoff an der Oberfläche mechanisch wenig stabile Bereiche aus Aerogelmaterial mit Durchmessern zwischen 0,5 und 5 mm entstehen, die unter mechanischen Belastungen durch Zerstörung der Aerogele an der Oberfläche schließlich zu Oberflächenunebenheiten mit Durchmessern beziehungsweise Tiefen bis zu 5 mm führen könnten.

Weiterhin ist es aufgrund der groben Körnung des Aerogels nicht möglich, folienartige Wärmeisolationskörper mit einer Dicke unter 0,5 mm herzustellen. Aber auch dickere Folienschichten leiden unter den im Verhältnis zur Foliendicke, relativ großen Aerogel-Partikeln, da vor allem in den Randbereichen ein erhöhter Bindemittel-Anteil benötigt wird, der sich negativ auf die thermische Leitfähigkeit und elektronischen Eigenschaften der getrockneten Folie oder des getrockneten Formkörpers auswirkt.

In der EP-A-0 340 707 wird ferner ein Verfahren beschrieben, wonach die Aerogel-Partikel mit einem Bindemittel beschichtet und/oder vermischt werden, und die erhaltene Masse anschließend in einer Form ausgehärtet wird. Aufgrund des großen Dichteunterschiedes zwischen dem Aerogel und dem anorganischen und/oder organischen Bindemittel und der Größe der Aerogel-Partikel neigt die vermischte Masse zur Entmischung, d.h. sie ist über einen für die Anwendung und Lagerung notwendigen, längeren Zeitraum instabil. Infolgedessen kann die Formgebung nur durch relativ schnelles Aushärten der vermischten Masse in einer umschließenden Form vonstatten gehen.

Weiterhin ist es nicht einfach, solche Dämmstoffe mit nur einem geringen Flüssigkeitsanteil herzustellen, da mit den in der EP-A-0 340 707 angegebenen Verfahren beim Mischen die Aerogel-Partikel aufgrund ihrer geringen mechanischen Festigkeit durch Schervorgänge leicht zerstört werden können.

Aufgabe ist es daher, ein Verbundmaterial auf der Basis von Aerogelen bereitzustellen, das eine niedrige Wärmeleitfähigkeit und eine hohe mechanische Festigkeit aufweist sowie frei von organischen Treibmitteln ist.

Diese Aufgabe wird gelöst durch ein Verbundmaterial, das 5 bis 97 Vol.-% Aerogel-Partikel und mindestens einen Klebstoff enthält, und das dadurch gekennzeichnet ist, daß der Teilchendurchmesser der Aerogel-Partikel kleiner als 0,5 mm ist.

Der oder die Klebstoffe bilden eine Matrix, die die Aerogel-Partikel verbindet bzw. umschließt und sich als durchgehende Phase durch das gesamte Verbundmaterial zieht.

Bei einem Gehalt an Aerogel-Partikel, der signifikant unter 5 Vol.-% in der Zusammensetzung liegt, würde aufgrund des niedrigen Anteils der Aerogel-Partikel in der Zusammensetzung deren positive Eigenschaften in hohem Maße verloren gehen. Eine solche Zusammensetzung würde nicht mehr niedrige Dichten und Wärmeleitfähiokeiten aufweisen.

Ein Gehalt an Aerogel-Partikel, der signifikant über 97 Vol.-% liegt, würde zu einem Gehalt an Klebstoff von unter 3 Vol.-% führen. In diesem Fall wäre dessen Anteil zu niedrig, um eine ausreichende Verbindung der Aerogel-Partikel untereinander sowie mechanische Druck- und Biegefestigkeit zu gewährleisten.

Vorzugsweise liegt der Anteil der Aerogel-Partikel im Bereich von 10 bis 97 Vol.-%, besonders bevorzugt im Bereich von 20 bis 95 Vol.-% und insbesondere im Bereich von 40 bis 95 Vol.-%.

Erfindungsgemäß ist der Teilchendurchmesser der Aerogel-Partikel kleiner als 0,5 mm, vorzugsweise kleiner als 0,2 mm. Für elektronische Anwendungen kann der Durchmesser noch wesentlich kleiner, jedoch vorzugsweise größer 1 µm, sein. Der Teilchendurchmesser bezieht sich auf den mittleren Durchmesser des einzelnen Aerogel-Teilchens, da die Aerogel-Teilchen herstellungsbedingt, beispielsweise durch Mahlen, nicht notwendigerweise eine sphärische Form aufweisen müssen.

Die Verwendung kleiner Aerogel-Partikel führt zu einer homogeneren Verteilung in der Zusammensetzung, was dazu führt, daß das Verbundmaterial an allen Stellen, insbesondere auch an den Oberflächen, eine nahezu einheitliche, niedrige Wärmeleitfähigkeit und Dielektrizitätskonstante aufweist.

Ferner führen kleine Aerogel-Partikel bei gleichem Aerogelanteil zu verbesserter mechanischer Stabilität gegenüber Bruch- und Rißbildung, da sich unter Belastung lokal keine so großen Spannungen aufbauen können.

Ein besonders hoher Anteil an Aerogel-Partikeln in dem Verbundmaterial läßt sich durch Verwendung einer bimodalen Verteilung der Korngrößen erreichen.

Geeignete Aerogele für die erfindungsgemäßen Zusammensetzungen sind solche auf Basis von Metalloxiden, die für die Sol-Gel-Technik geeignet sind (C.J. Brinker, G.W. Scherer, Sol-Gel-Science, 1990, Kap. 2 und 3), wie beispielsweise Si- oder Al-Verbindungen oder solche auf der Basis organischer Stoffe, die für die Sol-Gel-Technik geeignet sind, wie Melaminformaldehydkondensate (US-A-5 086 085) oder Resorcinformaldehydkondensate (US-A-4 873 218). Sie können auch auf Mischungen der obengenannten Materialien basieren. Bevorzugt verwendet werden Aerogele, enthaltend Si-Verbindungen, insbesondere SiO₂-Aerogele und ganz besonders bevorzugt SiO₂-Xerogele. Zur Reduktion des Strahlungsbeitrags der Wärmeleitfähigkeit kann das Aerogel IR-Trübungsmittel, wie z.B. Ruß, Titandioxid, Eisenoxide oder Zirkondioxid sowie Mischungen derselben enthalten.

In einer bevorzugten Ausführungsform weisen die Aerogel-Partikel dauerhaft hydrophobe Oberflächengruppen auf. Geeignete Gruppen zur dauerhaften Hydrophobisierung sind beispielsweise Silylgruppen der allgemeinen Formel -Si(R)ₙ, wobei n = 1, 2 oder 3 ist, vorzugsweise trisubstituierte Silylgruppen, wobei die Reste R im allgemeinen unabhängig voneinander gleich oder verschieden je ein Wasserstoffatom oder ein nicht reaktiver, organischer linearer, verzweigter, cyclischer, aromatischer oder heteroaromatischer Rest, vorzugsweise C₁-C₁₈-Alkyl oder C₆-C₁₄-Aryl, besonders bevorzugt C₁-C₆-Alkyl, Cyclohexyl oder Phenyl, insbesondere Methyl oder Ethyl, sind. Besonders vorteilhaft zur dauerhaften Hydrophobisierung des Aerogels ist die Verwendung von Trimethylsilylgruppen. Die Einbringung dieser Gruppen kann, wie in der WO 94/25149 beschrieben, erfolgen, oder durch Gasphasenreaktion zwischen dem Aerogel und beispielsweise einem aktivierten Trialkylsilanderivat, wie z.B. einem Chlortrialkylsilan oder einem Hexaalkyldisilazan (vergleiche R. Iler, The Chemistry of Silica, Wiley & Sons, 1979), geschehen. Verglichen mit OH-Gruppen, vermindern die so hergestellten hydrophoben Oberflächengruppen weiterhin den dielektrischen Verlustfaktor und die Dielektrizitätskonstante. Aerogel-Partikel mit hydrophilen Oberflächengruppen können je nach Luftfeuchtigkeit Wasser adsorbieren, was dazu führt, daß Dielektrizitätskonstante und dielektrischer Verlustfaktor mit der Luftfeuchtigkeit variieren können. Dies ist für elektronische Anwendungen oft nicht erwünscht. Die Verwendung von Aerogel-Partikeln mit hydrophoben Oberflächengruppen verhindert diese Variation, da kein Wasser adsorbiert wird. Die Auswahl der Reste richtet sich außerdem nach der typischen Anwendungstemperatur.

Werden Aerogel-Partikel mit hydrophoben Oberflächengruppen verwendet, erhält man bei Verwendung sehr kleiner Teilchendurchmesser ein hydrophobes Verbundmaterial, da das hydrophobe Aerogel homogen und sehr fein verteilt vorliegt. Grundsätzlich eignen sich jedoch alle Aerogele.

Darüber hinaus gilt, daß die thermische Leitfähigkeit der Aerogele mit zunehmender Porosität und abnehmender Dichte abnimmt. Bevorzugt sind deshalb Aerogele mit Porositäten über 60 % und Dichten unter 0,6 g/cm³. Besonders bevorzugt sind Aerogele mit Dichten unter 0,4 g/cm³.

Grundsätzlich sind alle bekannten Klebstoffe zur Herstellung der erfindungsgemäßen Verbundmaterialien geeignet, wobei unter einem Klebstoff in der vorliegenden Anmeldung ein nicht-wäßriges Bindemittel zu verstehen ist. Nicht-wäßrige Bindemittel im Sinn der vorliegenden Anmeldung sind Lösungsmittel oder Lösungsmittelgemische, die weniger als 50 Gew.-% Wasser enthalten. Der Klebstoff wird entweder in flüssiger Form, d. h. als Flüssigkeit, Schmelze, Lösung, Dispersion oder Suspension verwendet oder aber als festes Pulver eingesetzt.

Es können sowohl physikalisch abbindende als auch chemisch härtende Einkomponenten-Klebstoffe sowie chemisch härtende Zweikomponenten-Klebstoffe verwendet werden.

Geeignete physikalisch abbindende Einkomponenten-Klebstoffe sind z. B. Schmelzklebstoffe, wie Ethylenvinylacetat-Copolymere und Polyamide, Polyethylenwachse, Dispersionsklebstoffe, Lösemittelklebstoffe und Plastisole.

Geeignete chemisch härtende Einkomponenten-Klebstoffe sind z. B. wärmehärtende Epoxidharze, Formaldehydkondensate, Polyimide, Polybenzimidazole, Cyanacrylate, Polyvinylalkohole, Polyvinylbutyrale, anaerobe Klebstoffe, feuchtigkeitshärtende Silikone sowie licht- und UV-härtende Systeme, wobei Polyvinylbutyrale und/oder Polyvinylalkohole beziehungsweise Phenol-, Resorcin-, Harnstoff- und Melaminformaldehydharze sowie Mischungen derselben bevorzugt sind.

Geeignete chemisch härtende Zweikomponenten-Klebstoffe sind z. B. Methacrylate, Zweikomponenten-Silikone, kalthärtende Epoxidharze und kalthärtende Polyurethane.

Die Herstellung und Anwendung von Phenol-, Resorcin-, Harnstoff- und Melaminformaldehydharzen ist bekannt und beispielsweise im Kunststoffhandbuch 10 "Duroplaste", Herausgeber Prof. Dr. Woebcken, 2. Auflage, 1988, Hanser Verlag, beschrieben.

Der Klebstoff wird im allgemeinen in einer Menge von 3 bis 95 Vol.-% des Verbundmaterials verwendet, vorzugsweise in einer Menge von 3 bis 90 Vol.-%, besonders bevorzugt in einer Menge von 5 bis 80 Vol.-% und insbesondere in einer Menge von 5 bis 60 Vol.-%. Die Auswahl des Bindemittels erfolgt je nach den gewünschten mechanischen und thermischen Eigenschaften des Verbundmaterials.

Bei der Auswahl der Klebstoffe wählt man darüber hinaus vorzugsweise solche Produkte, die im wesentlichen nicht in das Innere der porösen Aerogel-Partikel eindringen. Das Eindringen des Klebstoffs in das Innere der Aerogel-Partikel kann neben der Auswahl des Klebstoffs auch über die Regelung der Temperatur sowie der Verarbeitungszeit beeinflußt werden.

Zur Reduktion des Strahlungsbeitrags der Wärmeleitfähigkeit kann das Verbundmaterial IR-Trübungsmittel, wie z.B. Ruß, Titandioxid, Eisenoxide oder Zirkondioxid sowie Mischungen derselben enthalten, was besonders für Anwendungen bei hohen Temperaturen vorteilhaft ist.

Desweiteren kann das Verbundmaterial auch noch bis zu 85 Vol.-% Füllstoffe, wie z. B. Holzmehl, Asbest und bevorzugt Cellulose, beispielsweise zur Verbesserung der mechanischen Eigenschaften, enthalten. Vorzugsweise liegt der Anteil der Füllstoffe, bezogen auf das Verbundmaterial, unter 70 % und besonders bevorzugt im Bereich von 0 bis 50 Vol.-%.

Weiterhin kann das Verbundmaterial auch noch mindestens ein Fasermaterial enthalten. Der Zusatz an Fasern ist insbesondere für thermische Anwendungen und im Hinblick auf Rißbildung und Bruchfestigkeit vorteilhaft.

Gegenüber einem Material, das nur aus Aerogel-Partikeln besteht, die über ihre Oberflächen verbunden oder in eine Klebstoffmatrix eingelagert sind, führen überraschenderweise schon geringe Volumenanteile von Fasern bei gleichem Volumenanteil von Klebstoff zu einer wesentlichen mechanischen Verstärkung, da sie wesentliche Teile der Last übernehmen. Wird ein höherer Volumenanteil Fasern verwendet und nur wenig Klebstoff so kann ein poröses Material erhalten werden, in dem die durch den Klebstoff verbundenen Fasern ein mechanisch stabiles Gerüst bilden, in das die Aerogel-Partikel eingelagert sind. Die dann auftretenden Luftporen führen zu einer höheren Porosität und damit verbesserten Schalldämpfung.

Als Fasermaterial können natürliche Fasern, wie z.B. Cellulose-, Baumwoll- oder Flachsfasern sowie künstliche Fasern verwendet werden, wobei als künstliche Fasern sowohl anorganische Fasern, wie z.B. Glasfasern, Mineralfasern, Siliziumcarbidfasern oder Kohlenstoffasern, als auch organische Fasern, wie z.B. Polyesterfasern, Polyamidfasern oder Polyaramidfasern eingesetzt werden können. Die Fasern können dabei neu sein oder aus Abfällen, wie z.B. geschredderten Glasfaserabfällen oder Lumpenresten, erzeugt worden sein. Die Fasern können auch beschichtet sein, wie z.B. Polyesterfasern, die mit einem Metall wie Aluminium metallisiert sind.

Die Fasern können glatt oder gekräuselt als Einzelfasern, als Bausch oder als Faservlies oder -gewebe vorliegen. Faservliese und/oder -gewebe können dabei als zusammenhängendes Ganzes und/oder in Form mehrerer kleiner Stücke in dem Verbundstoff enthalten sein.

Die Fasern können runde, trilobale, pentalobale, oktalobale, bändchen-, tannenbaum-, hantel- oder andere sternförmige Profile aufweisen. Ebenso können auch Hohlfasern verwendet werden.

Im allgemeinen werden Fasern mit einem Durchmesser zwischen 0,1 µm und 5 mm verwendet. Typischerweise führt bei festem Volumenanteil von Fasern die Verwendung geringerer Durchmesser zu bruchfesteren Verbundmaterialien.

Der Durchmesser der im Verbundmaterial verwendeten Fasern sollte vorzugsweise kleiner als der mittlere Durchmesser der Aerogel-Partikel sein, um einen hohen Anteil Aerogel im Verbundstoff binden zu können. Durch Wahl von sehr dünnen Fasern wird der Verbundstoff leichter biegsam.

Die Länge der Fasern ist in keinster Weise beschränkt. Vorzugsweise sollte jedoch die Länge der Fasern größer als der mittlere Durchmesser der Aerogel-Partikel sein.

Durch Länge und Verteilung der Fasern im Verbundmaterial kann dessen mechanische Festigkeit beeinflußt werden. Für diesen Anwendungszweck werden deshalb besonders bevorzugt Fasern eingesetzt, deren Länge zwischen 0,5 und 10 cm liegt.

Weiter können Mischungen der oben genannten Typen benutzt werden.

Die Stabilität wie auch die Wärmeleitfähigkeit des Verbundmaterials nimmt mit steigendem Faseranteil zu. Um eine signifikante Erhöhung der Wärmeleitfähigkeit durch die zugegebenen Fasern zu vermeiden, sollte der Volumenanteil der Fasern vorzugsweise zwischen 0,1 und 40 Vol.-% liegen, besonders bevorzugt im Bereich zwischen 0,1 und 15 Vol.-%.

Ferner sollte die Wärmeleitfähigkeit des Fasermaterials vorzugsweise < 1 W/mK sein.

Durch geeignete Wahl von Faserdurchmesser und/oder -material kann der Strahlungsbeitrag zur Wärmeleitfähigkeit reduziert und eine größere mechanische Festigkeit erzielt werden.
Dazu soll der Faserdurchmesser bei
a) nichtmetallisierten Fasern vorzugsweise 0,1 bis 30 µm und/oder bei
b) metallisierten Fasern vorzugsweise 0,1 bis 20 µm
betragen.

Der Strahlungsbeitrag zur Wärmeleitfähigkeit kann weiter dadurch reduziert werden, daß geschwärzte Fasern, wie z.B. mit Ruß geschwärzte Polyester-fasern oder direkt Kohlenstoffasern, verwendet werden.

Die Fasern können zur besseren Anbindung an die Matrix noch mit Schlichten oder Kontaktvermittlern (coupling agents) beschichtet sein, wie z.B. bei Glasfasern üblich.

Durch den Klebstoff werden entweder die Fasern und Aerogele untereinander und miteinander verbunden oder aber der Klebstoff dient als Matrixmaterial, in das die Fasern und die Aerogel-Partikel eingebettet sinu.

Darüber hinaus können im Verbundmaterial in geringen Mengen noch Gleitmittel, wie z. B. Zinkstearat, Pigmente, wie z. B. Titandioxid, Weichmacher, wie z. B. Glycerin und o,p-Toluolsulfonamid und/oder saure bzw. säureabspaltende Härtungsbeschleuniger enthalten sein.

Sollte das Verbundmaterial aufgrund des verwendeten Klebstoffs und/oder aufgrund von hydrophilen Aerogel-Partikeln hydrophil sein, kann gegebenenfalls eine nachträgliche Behandlung erfolgen, die dem Verbundmaterial hydrophobe Eigenschaften verleiht. Dazu eignen sich alle dem Fachmann für diesen Zweck bekannten Stoffe, die dem Verbundmaterial eine hydrophobe Oberfläche verleihen, wie z. B. Lacke, Folien, Silylierungsmittel, Silikonharze, anorganische und/oder organische Bindemittel.

Weiterhin können auch beim Verkleben sogenannte "coupling agents" eingesetzt werden. Sie bewirken einen besseren Kontakt des Klebstoffes mit der Oberfläche der Aerogel-Partikel und können darüber hinaus eine feste Bindung sowohl mit den Aerogel-Partikeln als auch mit dem Klebstoff eingehen.

Die erfindungsgemäß aus Aerogelgranulat hergestellten Formkörper, insbesondere in Plattenform, die das erfindungsgemäße Verbundmaterial enthalten, oder im wesentlichen aus diesem bestehen, weisen vorzugsweise eine Dichte von weniger als 0,6 g/cm³ und vorzugsweise eine Wärmeleitfähigkeit von weniger als 100 mW/m•K auf. Besonders bevorzugt liegt die Wärmeleitfähigkeit unter 50 mW/m•K und insbesondere im Bereich von 20 bis 40 mW/m•K.

Die Brandklasse des nach der Trocknung erhaltenen Verbundmaterials wird durch die Brandklasse des Aerogels und des Klebstoffs sowie gegebenenfalls die des Fasermaterials bestimmt. Um eine möglichst günstige Brandklasse des Verbundmaterials zu erhalten (schwer entflammbar oder unbrennbar), verwendet man Klebstoffe, die schwer entflammbar sind, wie z. B. Harnstoff- und Melaminformaldehydharze, Silikonharzklebstoffe, Polyimid- und Polybenzimidazolharze, sowie Fasern aus nicht brennbarem Material, wie z.B. Mineral-, Glas- oder SiC-Fasern.

Zur Herstellung der erfindungsgemäßen Verbundmaterialien werden die Aerogel-Partikel mittels mindestens einem Klebstoff miteinander verbunden. Die Verbindung der einzelnen Partikel miteinander kann dabei quasi punktförmig erfolgen. Eine solche oberflächliche Beschichtung kann beispielsweise durch Besprühen der Aerogel-Partikel mit dem Klebstoff erreicht werden. Die beschichteten Partikel werden dann beispielsweise in eine Form eingefüllt und in der Form ausgehärtet.

In einer bevorzugten Ausführungsform wird zusätzlich auch das Zwickelvolumen zwischen den einzelnen Partikeln ganz oder teilweise vom Klebstoff angefüllt. Eine solche Zusammensetzung läßt sich beispielsweise herstellen, indem man die Aerogel-Partikel und gegebenenfalls die Fasern mit dem Klebstoff mischt.

Das Mischen kann dabei in jeder nur denkbaren Weise durchgeführt werden. So ist es einerseits möglich, die mindestens zwei Komponenten gleichzeitig in die Mischvorrichtung einzubringen, andererseits kann aber auch eine der Komponenten vorgelegt und die andere(n) dann zugesetzt werden.

Auch die für das Mischen notwendige Mischvorrichtung ist in keinster Weise beschränkt. Es kann jede dem Fachmann für diesen Zweck bekannte Mischvorrichtung verwendet werden.

Der Mischvorgang wird solange durchgeführt, bis eine annähernd gleichmäßige Verteilung der Aerogel-Partikel in der Zusammensetzung vorliegt. Dabei kann der Mischvorgang sowohl über die Zeitdauer, als auch beispielsweise über die Geschwindigkeit der Mischvorrichtung geregelt werden.

Danach erfolgt die Formgebung und das Aushärten des Gemisches in der Form, was je nach Art des Klebstoffs durch Erwärmen und/oder Verdampfen des verwendeten Lösungs- und/oder Dispersionsmittels, oder aber bei Verwendung von Schmelzklebern durch Abkühlen unter die Schmelztemperatur des Klebers erfolgt.

In einer bevorzugten Ausführungsform wird das Gemisch verpreßt. Dabei ist es dem Fachmann möglich, für den jeweiligen Anwendungszweck die geeignete Presse und das geeignete Preßwerkzeug auszuwählen. Aufgrund des hohen Luftanteils der aerogelhaltigen Preßmassen ist der Einsatz von Vakuum-Pressen vorteilhaft. In einer bevorzugten Ausführungsform werden die aerogelhaltigen Preßmassen zu Platten verpreßt. Um ein Anbacken der Preßmasse an die Preßstempel zu vermeiden, kann das zu verpressende, aerogelhaltige Gemisch mit Trennpapier gegen die Preßstempel abgetrennt werden. Die mechanische Festigkeit der aerogelhaltigen Platten kann durch Auflaminieren von Siebgeweben, Vliesen oder Papieren auf die Plattenoberfläche verbessert werden. Die Siebgewebe, Vliese bzw. Papiere können sowohl nachträglich auf die aerogelhaltigen Platten aufgebracht werden, wobei die Siebgewebe, Vliese bzw. Papiere zuvor beispielsweise mit Melaminharzen imprägniert werden können und dann in einer beheizbaren Presse unter Druck mit den Plattenoberflächen verbunden werden, als auch, in einer bevorzugten Ausführungsform, in einem Arbeitsschritt durch Einlegen der Siebgewebe, Vliese bzw. Papiere, die gegebenenfalls zuvor mit Melaminharz imprägniert werden können, in die Preßform und Auflegen auf die zu verpressende aerogelhaltige Preßmasse und anschließend unter Druck und Temperatur zu einer aerogelhaltigen Verbundplatte verpresst werden.

Das Verpressen findet in Abhängigkeit vom verwendeten Klebstoff im allgemeinen bei Pressdrücken von 1 bis 1000 bar und Temperaturen von 0 bis 300°C in beliebigen Formen statt.

Im Fall der bevorzugten Phenol-, Resorcin-, Harnstoff- und Melaminformaldehydharze findet das Verpressen vorzugsweise bei Drücken von 5 bis 50 bar, besonders bevorzugt 10 bis 20 bar und Temperaturen vorzugsweise von 100 bis 200°C, besonders bevorzugt 130 bis 190°C und insbesondere zwischen 150 und 175°C in beliebigen Formen statt.

Die erfindungsgemäßen Verbundmaterialien eignen sich nach ihrer Härtung aufgrund ihrer geringen Wärmeleitfähigkeit als Wärmeisolationsmaterialien.

Die Erfindung wird im folgenden anhand von Ausführungsbeispielen näher beschrieben, ohne dadurch jedoch beschränkt zu werden.

Die hydrophoben Aerogele wurden analog dem in der DE-A-43 42 548 offenbarten Verfahren hergestellt.

Die Wärmeleitfähigkeiten der Aerogel-Granulate wurden mit einer Heizdrahtmethode (siehe z.B. O. Nielsson, G. Rüschenpöhler, J. Groß, J. Fricke, High Temperatures - High Pressures, Vol. 21, 267 - 274 (1989)) gemessen.

Die Wärmeleitfähigkeiten der Formkörper wurden nach DIN 52612 gemessen.

### Beispiel 1

### Formkörper aus Aerogel und Melamin-Formaldehydharz

Es werden 20 g hydrophobes Aerogel (94 Vol.-%) und 5 g Melaminformaldehydpulverharz Madurit® MW 909 (6 Vol.-%) innig vermischt. Das hydrophobe Aerogel-Granulat hat eine Korngröße im Bereich von 50 bis 250 µm, eine Schüttdichte von 0,1 g/cm³, eine BET-Oberfläche von 570 m²/g und eine Wärmeleitfähigkeit von 15,7 mW/mK. Der Boden der Preßform mit einer Grundfläche von 12 cm x 12 cm wird mit Trennpapier ausgelegt. Darauf wird die aerogelhalitge Preßmasse gleichmäßig verteilt, und das ganze mit einem Trennpapier abgedeckt. Es wird bei einer Temperatur von 170°C und einem Druck von 10 bar 30 Minuten gepreßt. Der erhaltene Formkörper hat eine Dichte von 0,32 g/cm³ und eine Wärmeleitfähigkeit von 30 mW/m•K.

### Beispiel 2

### Formkörper aus Aerogel, Melamin-Formaldehydharz und Gleitmittel

Es werden 20 g hydrophobes Aerogel (93 Vol.-%), 5 g Melaminformaldehydpulverharz Madurit® MW 909 (6 Vol.-%) und 1 g Zinkstearat (1 Vol.-%) innig vermischt und in einer Presse mit einer Grundfläche von 12 cm x 12 cm bei einer Temperatur von 170°C und einem Druck von 10 bar 30 Minuten gepreßt. Das hydrophobe Aerogel-Granulat hat eine Korngröße im Bereich von 50 bis 250 µm, eine Schüttdichte von 0,117 g/cm³, eine BET-Oberfläche von 540 m²/g und eine Wärmeleitfähigkeit von 18,4 mW/mK. Der erhaltene Formkörper hat eine Dichte von 0,33 g/cm³ und eine Wärmeleitfähigkeit von 33 mW/m•K.

### Beispiel 3

### Formkörper aus Aerogel, Melamin-Formaldehydharz und Füllstoff

Es werden 140 g hydrophobes Aerogel-Granulat aus Beispiel 2 (77 Vol.-%), 75 g Melaminformaldehydpulverharz Madurit® MW 909 (10 Vol.-%) und 17,5 g Mikrocellulose Typ 402-2B der Firma Mikrotechnik, Miltenberg am Main (13 Vol.-%) innig vermischt. Der Boden der Preßform mit einer Grundfläche von 30 cm x 30 cm wird mit Trennpapier ausgelegt, darüber kommt ein Siebgewebe mit Maschenweite 5 mm. Darauf wird die aerogelhaltige Preßmasse gleichmäßig verteilt, mit einem Siebgewebe von 5 mm Maschenweite bedeckt und das ganze mit einem Trennpapier abgedeckt. Es wird bei einer Temperatur von 160°C und einem Druck von 20 bar 9 Minuten mit anschließender Rückkühlung gepreßt. Der als stabile Platte erhaltene Formkörper hat eine Dichte von 0,38 g/cm³ und eine Wärmeleitfähigkeit von 37 mW/m•K.

### Beispiel 4

### Formkörper aus Aerogel, Melamin-Formaldehydharz sowie verschiedenen Fasermaterialien und/oder Füllstoffen

Es werden 140 g eines hydrophoben SiO₂-Aerogels aus Beispiel 2, 75 g Melaminformaldehydpulverharz Madurit® MW 909 und die in der Tabelle 1 angegebenen Fasermaterialien und/oder Füllstoffe innig vermischt und in einer Presse mit einer Grundfläche von 30 cm x 30 cm bei einer Temperatur von 160°C und einem Druck von 10 bis 20 bar 10 Minuten gepreßt. Die Dichten der erhaltenen Platten sind in Tabelle 1 aufgeführt.

**Tabelle 1:**

| Zusammensetzung der Preßmassen in Vol.-% und erhaltene Dichten der Formkörper | | | | | |
|---|---|---|---|---|---|
| Nr. | Aerogel [Vol.-%] | Madurit MW 909 [Vol.-%] | Fasermaterial [Vol.-%] | Füllstoff [Vol.-%] | Dichte [g/cm³] |
| A | 77 % | 10 % | Steinwolle 13 % | | 0,31 |
| B | 77 % | 10 % | Textilfasern 13 % | | 0,36 |
| C | 77 % | 10 % | Glasfasern 13 % | | 0,38 |
| D | 83 % | 11 % | | Mikrocellulose 6 % | 0,39 |
| E | 88 % | 11 % | Glasfaser 1 % | | 0,36 |
| F | 78 % | 11 % | Steinwolle 11 % | | 0,33 |
| G | 78 % | 11 % | | Mikrocellulose 11 % | 0,32 |
| H | 77 % | 10,5 % | Glasfaser 0,5 % | Mikrocellulose 12 % | 0,32 |
| I | 77 % | 10,7 % | Glasfaser 0,3 % | Mikrocellulose 12 % | 0,40 |

### Vergleichsbeispiel

### Formkörper aus Melamin-Formaldehydharz und Kieselsäure

Es werden 90 g Melaminformaldehydpulverharz Madurit® MW 396 mit 100 g Kieselsäure Perkasil® KS 404, 30 g Mikrocellulose und 2,5 g Zinkstearat gründlich durchgemischt und in einer Presse mit einer Grundfläche von 12 cm x 12 cm bei einer Temperatur von 155°C und einem Druck von 270 bar 4 Minuten gepreßt. Der erhaltene Formkörper hat eine Dichte von 1,37 g/cm³ und eine Wärmeleitfähigkeit von 150 mW/m•K.

### Beispiel 5

### Formkörper aus Aerogel und Polyvinylalkohol

Es werden 90 Gew.-% hydrophobes Aerogel-Granulat und 10 Gew.-% einer Polyvinylalkohollösung innig vermischt. Das hydrophobe Aerogelgranulat hat eine Korngröße kleiner 500 µm, eine Schüttdichte von 75 kg/m³, eine BET-Oberfläche von 610 m²/g und eine Wärmeleitfähigkeit von 15 mW/(m·K). Die Polyvinylalkohollösung besteht aus 10 Gew.-% ®Mowiol Typ 40-88 und 90 Gew.-% Ethanol.

Der Boden der Preßform mit einer Grundfläche von 12 cm x 12 cm wird mit Trennpapier ausgelegt. Darauf wird die aerogelhaltige Preßmasse gleichmäßig verteilt und das ganze mit einem Trennpapier abgedeckt. Es wird bei Umgebungstemperatur mit einem Druck von 70 bar für 2 Minuten gepreßt und anschließend getrocknet.

Der erhaltene Formkörper hat eine Wärmeleitfähigkeit von 24 mW/(m·K).

### Beispiel 6

### Formkörper aus Aerogel und Polyethylenwachs

Es werden 60 Gew.-% hydrophobes Aerogel-Granulat aus Beispiel 5 und 40 Gew.-% Polyethylenwachspulver ®Ceridust 130 innig vermischt.

Der Boden der Preßform mit einer Grundfläche von 12 cm x 12 cm wird mit Trennpapier ausgelegt. Darauf wird die aerogelhaltige Preßmasse gleichmäßig verteilt und das ganze mit einem Trennpapier abgedeckt. Es wird bei 170°C mit einem Druck von 70 bar für 30 Minuten gepreßt.

Der erhaltene Formkörper hat eine Wärmeleitfähigkeit von 25 mW/(m·K).

### Beispiel 7

### Formkörper aus Aerogel und Polyethylenwachs

Es werden 50 Gew.-% hydrophobes Aerogel-Granulat aus Beispiel 5 und 50 Gew.-% Polyethylenwachspulver Hoechst-Wachs PE 520 innig vermischt.

Der Boden der Preßform mit einer Grundfläche von 12 cm x 12 cm wird mit Trennpapier ausgelegt. Darauf wird die aerogelhaltige Preßmasse gleichmäßig verteilt und das ganze mit einem Trennpapier abgedeckt. Es wird bei 180°C mit einem Druck von 70 bar für 30 Minuten gepreßt.

Der erhaltene Formkörper hat eine Wärmeleitfähigkeit von 28 mW/(m·K).

### Beispiel 8

### Formkörper aus Aerogel und Polyvinylbutyral

Es werden 80 Vol.-% hydrophobes Aerogel-Granulat und 20 Vol.-% Polyvinylbutyralpulver ®Mowital (Polymer F) innig vermischt. Das hydrophobe Aerogelgranulat hat eine Korngröße kleiner 500 µm, eine Schüttdichte von 75 kg/m³, eine BET-Oberfläche von 640 m²/g und eine Wärmeleitfähigkeit von 11 mW/(m·K).

Der Boden der Preßform mit einer Grundfläche von 30 cm x 30 cm wird mit Trennpapier ausgelegt. Darauf wird die aerogelhaltige Preßmasse gleichmäßig verteilt und das ganze mit einem Trennpapier abgedeckt. Es wird bei 220°C für 30 Minuten auf eine Dicke von 18 mm gepreßt.

Der erhaltene Formkörper hat eine Dichte von 361 kg/m³ und eine Wärmeleitfähigkeit von 33 mW/(m·K).

### Beispiel 9

### Formkörper aus Aerogel und Polyvinylbutyral

Es werden 90 Vol.-% hydrophobes Aerogel-Granulat aus Beispiel 8 und 10 Vol.-% Polyvinylbutyralpulver ®Mowital (Polymer F) innig vermischt.

Der Boden der Preßform mit einer Grundfläche von 30 cm x 30 cm wird mit Trennpapier ausgelegt. Darauf wird die aerogelhaltige Preßmasse gleichmäßig verteilt und das ganze mit einem Trennpapier abgedeckt. Es wird bei 220°C für 30 Minuten auf eine Dicke von 18 mm gepreßt.

Der erhaltene Formkörper hat eine Dichte von 335 kg/m³ und eine Wärmeleitfähigkeit von 24 mW/(m·K).

### Beispiel 10

### Formkörper aus Aerogel und Polyvinylbutyral

Es werden 95 Vol.-% hydrophobes Aerogel-Granulat aus Beispiel 8 und 5 Vol.-% Polyvinylbutyralpulver ®Mowital (Polymer F) innig vermischt.

Der Boden der Preßform mit einer Grundfläche von 30 cm x 30 cm wird mit Trennpapier ausgelegt. Darauf wird die aerogelhaltige Preßmasse gleichmäßig verteilt und das ganze mit einem Trennpapier abgedeckt. Es wird bei 220°C für 30 Minuten auf eine Dicke von 18 mm gepreßt.

Der erhaltene Formkörper hat eine Dichte von 246 kg/m³ und eine Wärmeleitfähigkeit von 19 mW/(m·K).

### Beispiel 11

### Formkörper aus Aerogel, Polyvinylbutyral und Fasern

Es werden 90 Vol.-% hydrophobes Aerogel-Granulat aus Beispiel 8, 8 Vol.-% Polyvinylbutyralpulver ®Mowital (Polymer F) und 2 Vol.-% ®Trevira Hochfest Fasern innig vermischt.

Der Boden der Preßform mit einer Grundfläche von 30 cm x 30 cm wird mit Trennpapier ausgelegt. Darauf wird die aerogelhaltige Preßmasse gleichmäßig verteilt und das ganze mit einem Trennpapier abgedeckt. Es wird bei 220°C für 30 Minuten auf eine Dicke von 18 mm gepreßt.

Der erhaltene Formkörper hat eine Dichte von 269 kg/m³ und eine Wärmeleitfähigkeit von 20 mW/(m·K).

### Beispiel 12

### Formkörper aus Aerogel, Polyvinylbutyral und Recyclingfasern

Es werden 80 Vol.-% hydrophobes Aerogel-Granulat aus Beispiel 8, 10 Vol.-% Polyvinylbutyralpulver ®Mowital (Polymer F) und 10 Vol.-% grob aufgeschlossene Polyesterfaserreste als Recyclingfasern innig vermischt.

Der Boden der Preßform mit einer Grundfläche von 30 cm x 30 cm wird mit Trennpapier ausgelegt. Darauf wird die aerogelhaltige Preßmasse gleichmäßig verteilt und das ganze mit einem Trennpapier abgedeckt. Es wird bei 220°C für 30 Minuten auf eine Dicke von 18 mm gepreßt.

Der erhaltene Formkörper hat eine Dichte von 282 kg/m³ und eine Wärmeleitfähigkeit von 25 mW/(m·K).

### Beispiel 13

### Formkörper aus Aerogel, Polyvinylbutyral und Folienresten

Es werden 80 Vol.-% hydrophobes Aerogel-Granulat aus Beispiel 8, 10 Vol.-% Polyvinylbutyralpulver ®Mowital (Polymer F) und 10 Vol.-% Polyesterfolienschnipsel mit einer Dicke von 14 µm als Folienreste innig vermischt.

Der Boden der Preßform mit einer Grundfläche von 30 cm x 30 cm wird mit Trennpapier ausgelegt. Darauf wird die aerogelhaltige Preßmasse gleichmäßig verteilt und das ganze mit einem Trennpapier abgedeckt. Es wird bei 220°C für 30 Minuten auf eine Dicke von 18 mm gepreßt.

Der erhaltene Formkörper hat eine Dichte von 355 kg/m³ und eine Wärmeleitfähigkeit von 26 mW/(m·K).

## Patentansprüche (Patentansprüche für folgende(n) Vertragsstaat(en): AT, CH, LI, DK, ES)

1. Verbundmaterial, das 5 bis 97 Vol.-% Aerogel-Partikel und mindestens einen Klebstoff enthält, **dadurch gekennzeichnet, daß** der Teilchendurchmesser der Aerogel-Partikel kleiner als 0,5 mm ist.

2. Verbundmaterial gemäß Anspruch 1, **dadurch gekennzeichnet, daß** der Anteil der Aerogel-Partikel im Bereich von 20 bis 95 Vol.-% liegt.

3. Verbundmaterial gemäß Anspruch 1 oder 2, **dadurch gekennzeichnet, daß** der Teilchendurchmesser der Aerogel-Partikel kleiner als 0,2 mm ist.

4. Verbundmaterial gemäß mindestens einem der Ansprüche 1 bis 3, **dadurch gekennzeichnet, daß** die Korngrößen der Aerogel-Partikel eine bimodale Verteilung aufweisen.

5. Verbundmaterial gemäß mindestens einem der Ansprüche 1 bis 4, **dadurch gekennzeichnet, daß** das Aerogel ein SiO₂-Aerogel ist.

6. Verbundmaterial gemäß mindestens einem der Ansprüche 1 bis 5, **dadurch gekennzeichnet, daß** die Aerogel-Partikel dauerhaft hydrophobe Oberflächengruppen aufweisen.

7. Verbundmaterial gemäß mindestens einem der Ansprüche 1 bis 6, **dadurch gekennzeichnet, daß** die Aerogel-Partikel Porositäten über 60 % und Dichten unter 0,6 g/cm³ aufweisen.

8. Verbundmaterial gemäß mindestens einem der Ansprüche 1 bis 7, **dadurch gekennzeichnet, daß** die Aerogel-Partikel und/oder das Verbundmaterial mindestens ein IR-Trübungsmittel enthalten.

9. Verbundmaterial gemäß mindestens einem der Ansprüche 1 bis 8, **dadurch gekennzeichnet, daß** das Verbundmaterial Fasern enthält.

10. Verbundmaterial gemäß Anspruch 9, **dadurch gekennzeichnet, daß** der Anteil der Fasern im Bereich von 0,1 bis 40 Vol.-% liegt.

11. Verbundmaterial gemäß mindestens einem der Ansprüche 1 bis 10, **dadurch gekennzeichnet, daß** das Verbundmaterial Füllstoffe enthält.

12. Verbundmaterial gemäß mindestens einem der Ansprüche 1 bis 11, **dadurch gekennzeichnet, daß** als Klebstoff Phenol-, Resorcin-, Harnstoff- und Melaminformaldehydharze sowie Mischungen derselben verwendet werden.

13. Verbundmaterial gemäß mindestens einem der Ansprüche 1 bis 11, **dadurch gekennzeichnet, daß** als Klebstoff Polyvinylbutyrale und/oder Polyvinylalkohole verwendet werden.

14. Verbundmaterial gemäß mindestens einem der Ansprüche 1 bis 13, **dadurch gekennzeichnet, daß** es eine Dichte unter 0,6 g/cm³ und eine Wärmeleitfähigkeit von weniger als 100 mW/mK aufweist.

15. Verbundmaterial gemäß mindestens einem der Ansprüche 1 bis 14, **dadurch gekennzeichnet, daß** das Verbundmaterial zumindest eine hydrophobe Oberfläche aufweist.

16. Verfahren zur Herstellung eines Verbundmaterials gemäß mindestens einem der Ansprüche 1 bis 15, **dadurch gekennzeichnet, daß** man die Aerogel-Partikel mit dem Klebstoff mischt, die Mischung der Formgebung und der Härtung unterzieht.

17. Verfahren gemäß Anspruch 16, **dadurch gekennzeichnet, daß** man die Mischung zur Formgebung und/oder Härtung verpreßt.

18. Verfahren gemäß Anspruch 17, **dadurch gekennzeichnet, daß** man das Verpressen bei Pressdrücken von 1 bis 1000 bar und Temperaturen von 0 bis 300°C durchführt.

19. Verwendung eines Verbundmaterials gemäß mindestens einem der Ansprüche 1 bis 15 als Wärmedämmstoff.

20. Formkörper, enthaltend ein Verbundmaterial gemäß mindestens einem der Ansprüche 1 bis 15.

21. Formkörper, im wesentlichen bestehend aus einem Verbundmaterial gemäß mindestens einem der Ansprüche 1 bis 15.

22. Formkörper gemäß Anspruch 20 oder 21, **dadurch gekennzeichnet, daß** er die Form einer Platte aufweist.

## Patentansprüche (Patentansprüche für folgende(n) Vertragsstaat(en): BE, DE, FR, GB, IT, NL, SE)

1. Verbundmaterial, das 5 bis 97 Vol.-% Aerogel-Partikel und mindestens einen organischen Klebstoff enthält, aber weder Schichtsilikate noch Tonminerale enthält, **dadurch gekennzeichnet daß** der Teilchendurchmesser der Aerogel-Partikelgrößer als 1 µm und kleiner als 0,5 mm ist.

2. Verbundmaterial gemäß Anspruch 1, **dadurch gekennzeichnet, daß** der Anteil der Aerogel-Partikel im Bereich von 20 bis 95 Vol.-% liegt.

3. Verbundmaterial gemäß Anspruch 1 oder 2, **dadurch gekennzeichnet, daß** der Teilchendurchmesser der Aerogel-Partikel kleiner als 0,2 mm ist.

4. Verbundmaterial gemäß mindestens einem der Ansprüche 1 bis 3, **dadurch gekennzeichnet, daß** die Korngrößen der Aerogel-Partikel eine bimodale Verteilung aufweisen.

5. Verbundmaterial gemäß mindestens einem der Ansprüche 1 bis 4, **dadurch gekennzeichnet, daß** das Aerogel ein SiO₂-Aeroget ist.

6. Verbundmaterial gemäß mindestens einem der Ansprüche 1 bis 5, **dadurch gekennzeichnet, daß** die Aerogel-Partikel dauerhaft hydrophobe Oberflächengruppen aufweisen.

7. Verbundmaterial gemäß mindestens einem der Ansprüche 1 bis 6, **dadurch gekennzeichnet, daß** die Aerogel-Partikel Porositäten über 60 % und Dichten unter 0,6 g/cm³ aufweisen.

8. Verbundmaterial gemäß mindestens einem der Ansprüche 1 bis 7, **dadurch gekennzeichnet, daß** die Aerogel-Partikel und/oder das Verbundmaterial mindestens ein IR-Trübungsmittel enthalten.

9. Verbundmaterial gemäß mindestens einem der Ansprüche 1 bis 8, **dadurch gekennzeichnet, daß** das Verbundmaterial Fasern enthält.

10. Verbundmaterial gemäß Anspruch 9, **dadurch gekennzeichnet, daß** der Anteil der Fasern im Bereich von 0,1 bis 40 Vol.-% liegt.

11. Verbundmaterial gemäß mindestens einem der Ansprüche 1 bis 10, **dadurch gekennzeichnet, daß** das Verbundmaterial Füllstoffe enthält.

12. Verbundmaterial gemäß mindestens einem der Ansprüche 1 bis 11, **dadurch gekennzeichnet, daß** als Klebstoff Phenol-, Resorcin-, Harnstoff- und Melaminformaldehydharze sowie Mischungen derselben verwendet werden.

13. Verbundmaterial gemäß mindestens einem der Ansprüche 1 bis 11, **dadurch gekennzeichnet, daß** als Klebstoff Polyvinylbutyrale und/oder Polyvinylalkohole verwendet werden.

14. Verbundmaterial gemäß mindestens einem der Ansprüche 1 bis 13, **dadurch gekennzeichnet, daß** es eine Dichte unter 0,6 g/cm³ und eine Wärmeleitfähigkeit von weniger als 100 mW/mK aufweist.

15. Verbundmaterial gemäß mindestens einem der Ansprüche 1 bis 14, **dadurch gekennzeichnet, daß** das Verbundmaterial zumindest eine hydrophobe Oberfläche aufweist.

16. Verfahren zur Herstellung eines Verbundmaterials gemäß mindestens einem der Ansprüche 1 bis 15, **dadurch gekennzeichnet, daß** man die Aerogel-Partikel mit dem Klebstoff mischt, die Mischung der Formgebung und der Härtung unterzieht.

17. Verfahren gemäß Anspruch 16, **dadurch gekennzeichnet, daß** man die Mischung zur Formgebung und/oder Härtung verpreßt.

18. Verfahren gemäß Anspruch 17, **dadurch gekennzeichnet, daß** man das Verpressen bei Pressdrücken von 1 bis 1000 bar und Temperaturen von 0 bis 300°C durchführt.

19. Verwendung eines Verbundmaterials gemäß mindestens einem der Ansprüche 1 bis 15 als Wärmedämmstoff.

20. Formkörper, enthaltend ein Verbundmaterial gemäß mindestens einem der Ansprüche 1 bis 15.

21. Formkörper, im wesentlichen bestehend aus einem Verbundmaterial gemäß mindestens einem der Ansprüche 1 bis 15.

22. Formkörper gemäß Anspruch 20 oder 21, **dadurch gekennzeichnet, daß** er die Form einer Platte aufweist.

## Claims (Claims for the following Contracting State(s): AT, CH, LI, DK, ES)

1. A composite material that contains 5 to 97%vol aerogel particles and at least one adhesive, **characterised in that** the diameter of the aerogel particles is less than 0,5mm.

2. A composite material as defined in Claim 1, characterized that the proportion of aerogel particles is in the range from 20 to 95%-vol.

3. A composite material as defined in Claim 1 or Claim 2, **characterised in that** the diameter of the aerogel particles is less than 0.2 mm.

4. A composite material as defined in at least one of the Claims 1 to 3, **characterised in that** the grain sizes of the aerogel particles are in a bimodal distribution.

5. A composite material as defined in at least one of the Claims 1 to 4, **characterised in that** the aerogel is an SiO₂ gel.

6. A composite material as defined in at least one of the Claims 1 to 5, **characterised in that** the aerogel particles have permanently hydrophobic surface groups.

7. A composite material as defined in at least one of the Claims 1 to 6, **characterised in that** the aerogel particles are of porosities above 60% and densities of less than 0.6 g/cm³.

8. A composite material as defined in at least one of the Claims 1 to 7, **characterised in that** the aerogel particles and/or the binder contain at least one infrared opacifier.

9. A composite material as defined in at least one of the Claims 1 to 8, **characterised in that** the composite material contains fibres.

10. A composite material as defined in Claim 9, **characterised in that** the proportion of fibres is in the range from 0.1 to 40%-vol.

11. A composite material as defined in at least one of the Claims 1 to 10, **characterised in that** the composite material contains extenders.

12. A composite material as defined in at least one of the Claims 1 to 11, **characterised in that** phenol, resorcin, urea, and melamineformaldehyde resins, as well as mixtures of these, are used as adhesive.

13. A composite material as defined in at least one of the Claims 1 to 11, **characterised in that** polyvinylbutyrals and/or polyvinylalcohols are used as adhesive.

14. A composite material as defined in at least one of the Claims 1 to 13, **characterised in that** it has a density of less than 0.6 g/cm³ and a thermal conductivity of less than 100 mW/mK.

15. A composite material as defined in at least one of the Claims 1 to 14, **characterized in that** the composite material has at least a hydrophobic surface.

16. A process for manufacturing the composite material as defined in at least one of the Claims 1 to 15, **characterised in that** the aerogel particles are mixed with the adhesive, the mixture is shaped, and it is then hardened.

17. A process as defined in Claim 16, **characterised in that** the mixture is compressed for purposes of shaping and/or hardening.

18. A process as defined in Claim 17, **characterised in that** compression is effected at press pressures of 1 to 1000 bar and at temperatures from 0 to 300°C.

19. Use of a composite material as defined in at least one of the Claims 1 to 15 as thermal insulation material.

20. Moulded part containing a composite material as defined in at least one of the Claims 1 to 15.

21. Moulded part consisting essentially of a composite material as defined in at least one of the Claims 1 to 15.

22. Moulded part as defined in Claim 20 or Claim 21, **characterised in that** it is in the form of a panel.

## Claims (Claims for the following Contracting State(s): BE, DE, FR, GB, IT, NL, SE)

1. A composite material that contains 5 to 97%vol aerogel particles and at least one adhesive, but neither layered silicates nor clay minerals, **characterised in that** the diameter of the aerogel particles is greater than 1 µm and less than 0,5 mm.

2. A composite material as defined in Claim 1, characterized that the proportion of aerogel particles is in the range from 20 to 95%-vol.

3. A composite material as defined in Claim 1 or Claim 2, **characterised in that** the diameter of the aerogel particles is less than 0.2 mm.

4. A composite material as defined in at least one of the Claims 1 to 3, **characterised in that** the grain sizes of the aerogel particles are in a bimodal distribution.

5. A composite material as defined in at least one of the Claims 1 to 4, **characterised in that** the aerogel is an SiO₂ gel.

6. A composite material as defined in at least one of the Claims 1 to 5, **characterised in that** the aerogel particles have permanently hydrophobic surface groups.

7. A composite material as defined in at least one of the Claims 1 to 6, **characterised in that** the aerogel particles are of porosities above 60% and densities of less than 0.6 g/cm³.

8. A composite material as defined in at least one of the Claims 1 to 7, **characterised in that** the aerogel particles and/or the binder contain at least one infrared opacifier.

9. A composite material as defined in at least one of the Claims 1 to 8, **characterised in that** the composite material contains fibres.

10. A composite material as defined in Claim 9, **characterised in that** the proportion of fibres is in the range from 0.1 to 40%-vol.

11. A composite material as defined in at least one of the Claims 1 to 10, **characterised in that** the composite material contains extenders.

12. A composite material as defined in at least one of the Claims 1 to 11, **characterised in that** phenol, resorcin, urea, and melamineformaldehyde resins, as well as mixtures of these, are used as adhesive.

13. A composite material as defined in at least one of the Claims 1 to 11, **characterised in that** polyvinylbutyrals and/or polyvinylalcohols are used as adhesive.

14. A composite material as defined in at least one of the Claims 1 to 13, **characterised in that** it has a density of less than 0.6 g/cm³ and a thermal conductivity of less than 100 mW/mK.

15. A composite material as defined in at least one of the Claims 1 to 14, **characterized in that** the composite material has at least a hydrophobic surface.

16. A process for manufacturing the composite material as defined in at least one of the Claims 1 to 15, **characterised in that** the aerogel particles are mixed with the adhesive, the mixture is shaped, and it is then hardened.

17. A process as defined in Claim 16, **characterised in that** the mixture is compressed for purposes of shaping and/or hardening.

18. A process as defined in Claim 17, **characterised in that** compression is effected at press pressures of 1 to 1000 bar and at temperatures from 0 to 300°C.

19. Use of a composite material as defined in at least one of the Claims 1 to 15 as thermal insulation material.

20. Moulded part containing a composite material as defined in at least one of the Claims 1 to 15.

21. Moulded part consisting essentially of a composite material as defined in at least one of the Claims I to 15.

22. Moulded part as defined in Claim 20 or Claim 21, **characterised in that** it is in the form of a panel.

## Revendications (Revendications pour l'(les) Etat(s) contractant(s) suivant(s): AT, CH, LI, DK, ES)

1. Matériau composite qui présente une teneur de 5 à 97 % en volume de particules d'aérogel et renferme au moins un adhésif organique, **caractérisé en ce que** le diamètre de particule des particules d'aérogel est inférieur à 0,5 mm.

2. Matériau composite selon la revendication 1, **caractérisé en ce que** le taux des particules d'aérogel se situe dans le domaine de 20 à 95 % en volume.

3. Matériau composite selon la revendication 1 ou 2, **caractérisé en ce que** le diamètre de particule des particules d'aérogel est inférieur à 0,2 mm.

4. Matériau composite selon au moins l'une des revendications 1 à 3, **caractérisé en ce que** les dimensions des particules d'aérogel présentent une distribution bimodale.

5. Matériau composite selon au moins l'une des revendications 1 à 4, **caractérisé en ce que** l'aérogel est un aérogel de SiO₂.

6. Matériau composite selon au moins l'une des revendications 1 à 5, **caractérisé en ce que** les particules d'aérogel présentent des groupes de surface durablement hydrophobes.

7. Matériau composite selon au moins l'une des revendications 1 à 6, **caractérisé en ce que** les particules d'aérogel présentent des porosités supérieures à 60 % et des masses volumiques inférieures à 0,6 g/cm³.

8. Matériau composite selon au moins l'une des revendications 1 à 7, **caractérisé en ce que** la particule d'aérogel et/ou matériau composite renferment au moins un agent d'opacité IR.

9. Matériau composite selon au moins l'une des revendications 1 à 8, **caractérisé en ce que** le matériau composite renferme des fibres.

10. Matériau composite selon la revendication 9, **caractérisé en ce que** le taux des fibres se situe dans le domaine de 0,1 à 40 % en volume.

11. Matériau composite selon au moins l'une des revendications 1 à 10, **caractérisé en ce que** que le matériau composite renferme des charges.

12. Matériau composite selon au moins l'une des revendications 1 à 11, **caractérisé en ce qu'**on utilise en tant qu'adhésif des résines phénol-, résorcine-, urée et mélamine-formaldéhdye ainsi que leurs mélanges.

13. Matériau composite selon au moins l'une des revendications 1 à 11, **caractérisé en ce qu'**on utilise en tant qu'adhésif des poly(butyrals de vinyle) et/ou poly(alcools de vinyle).

14. Matériau composite selon au moins l'une des revendications 1 à 13, **caractérisé en ce qu'**il présente une masse volumique inférieure à 0,6 g/cm³ et une conductibilité thermique inférieure à 100 mW/mK.

15. Matériau composite selon au moins l'une des revendications 1 à 15, **caractérisé en ce que** le matériau composite présente au moins une surface hydrophobe.

16. Procédé pour la fabrication d'un matériau composite selon au moins l'une des revendications 1 à 15, **caractérisé en ce qu'**on mélange les particules d'aérogel avec l'adhésif, on soumet le mélange au moulage et au durcissement.

17. Procédé selon la revendication 16, **caractérisé en ce qu'**on comprime le mélange pour le moulage et/ou durcissement.

18. Procédé selon la revendication 17, **caractérisé en ce qu'**on réalise la compression sous une pression de 1 à 1000 bars et à une température de 0 à 300°C.

19. Utilisation d'un matériau composite selon au moins l'une des revendications 1 à 16 en tant que matériau calorifuge.

20. Pièces moulées renfermant un matériau composite selon au moins l'une des revendications 1 à 15.

21. Pièce moulée essentiellement constituée par un matériau composite selon au moins l'une des revendications 1 à 15.

22. Pièce moulée selon la revendication 20 ou 21, **caractérisée en ce qu'**elle présente la forme d'une plaque.

## Revendications (Revendications pour l'(les) Etat(s) contractant(s) suivant(s): BE, DE, FR, GB, IT, NL, SE)

1. Matériau composite qui présente une teneur de 5 à 97 % en volume de particules d'aérogel et au moins un adhésif organique, mais qui ne renferme ni phyllosilicates ni de minéral argileux, **caractérisé en ce que** le diamètre de particule des particules d'aérogel est supérieur à 1 µm et inférieur à 0,5 mm.

2. Matériau composite selon la revendication 1, **caractérisé en ce que** le taux des particules d'aérogel se situe dans le domaine de 20 à 95 % en volume.

3. Matériau composite selon la revendication 1 ou 2, **caractérisé en ce que** le diamètre de particule des particules d'aérogel est inférieur à 0,2 mm.

4. Matériau composite selon au moins l'une des revendications 1 à 3, **caractérisé en ce que** les dimensions des particules d'aérogel présentent une distribution bimodale.

5. Matériau composite selon au moins l'une des revendications 1 à 4, **caractérisé en ce que** l'aérogel est un aérogel de SiO₂.

6. Matériau composite selon au moins l'une des revendications 1 à 5, **caractérisé en ce que** les particules d'aérogel présentent des groupes de surface durablement hydrophobes.

7. Matériau composite selon au moins l'une des revendications 1 à 6, **caractérisé en ce que** les particules d'aérogel présentent des porosités supérieures à 60 % et des masses volumiques inférieures à 0,6 g/cm³.

8. Matériau composite selon au moins l'une des revendications 1 à 7, **caractérisé en ce que** la particule d'aérogel et/ou matériau composite renferment au moins un agent d'opacité IR.

9. Matériau composite selon au moins l'une des revendications 1 à 8, **caractérisé en ce que** le matériau composite renferme des fibres.

10. Matériau composite selon la revendication 9, **caractérisé en ce que** le taux des fibres se situe dans le domaine de 0,1 à 40 % en volume.

11. Matériau composite selon au moins l'une des revendications 1 à 10, **caractérisé en ce que** que le matériau composite renferme des charges.

12. Matériau composite selon au moins l'une des revendications 1 à 11, **caractérisé en ce qu'**on utilise en tant qu'adhésif des résines phénol-, résorcine-, urée et mélamine-formaldéhdye ainsi que leurs mélanges.

13. Matériau composite selon au moins l'une des revendications 1 à 11, **caractérisé en ce qu'**on utilise en tant qu'adhésif des poly(butyrals de vinyle) et/ou polyalcools de vinyle).

14. Matériau composite selon au moins l'une des revendications 1 à 13, **caractérisé en ce qu'**il présente une masse volumique inférieure à 0,6 g/cm³ et une conductibilité thermique inférieure à 100 mW/mK.

15. Matériau composite selon au moins l'une des revendications 1 à 15, **caractérisé en ce que** le matériau composite présente au moins une surface hydrophobe.

16. Procédé pour la fabrication d'un matériau composite selon au moins l'une des revendications 1 à 15, **caractérisé en ce qu'**on mélange les particules d'aérogel avec l'adhésif, on soumet le mélange au moulage et au durcissement.

17. Procédé selon la revendication 16, **caractérisé en ce qu'**on comprime le mélange pour le moulage et/ou durcissement.

18. Procédé selon la revendication 17, **caractérisé en ce qu'**on réalise la compression sous une pression de 1 à 1000 bars et à une température de 0 à 300°C.

19. Utilisation d'un matériau composite selon au moins l'une des revendications 1 à 16 en tant que matériau calorifuge.

20. Pièces moulées renfermant un matériau composite selon au moins l'une des revendications 1 à 15.

21. Pièce moulée essentiellement constituée par un matériau composite selon au moins l'une des revendications 1 à 15.

22. Pièce moulée selon la revendication 20 ou 21, **caractérisée en ce qu'**elle présente la forme d'une plaque.
